# EUROPEAN PATENT APPLICATION

(11) **EP 2 869 292 A2**
(43) Date of publication of application: **06.05.2015**
(21) Application number: 14190866.5
(22) Date of filing: 29.10.2014
(51) Int. Cl.: G09G 3/32, G09G 3/36, G09G 5/10, G09G 5/14

(54) **Method and apparatus for controlling screen brightness in electronic device**

(30) Priority: 29.10.2013 KR 20130129048
(71) Applicant: Samsung Electronics Co., Ltd, Gyeonggi-do 443-742 (KR)
(72) Inventor: Won, Sungjoon, 443-742 Gyeonggi-do (KR)
(74) Representative: Nederlandsch Octrooibureau

(57) **Abstract**

A method of controlling screen brightness in an electronic device. The method includes determining whether to control screen brightness when displaying a screen; dividing a display area of screen information partially displayed on the screen if it is determined to control screen brightness; and partially controlling screen brightness of a display area having a low priority in the screen information of which the display area has been divided.

## Description

### BACKGROUND

### 1. Field of the invention

The present invention relates generally to a method and an apparatus for controlling screen brightness in an electronic device.

### 2. Description of the Related Art

An electronic device may control screen brightness according to a selection by a user. In a method of controlling the screen brightness, a configuration is maintained regardless of ambient brightness before the configuration is changed by the user. In another method of controlling the screen brightness of the electronic device, ambient brightness is detected using an illuminance sensor. In the method using the illuminance sensor, screen brightness is controlled according to ambient brightness. An electronic device employing the method using the illuminance sensor controls a screen to be brighter in a bright outdoor environment and controls the screen to be darker in a dark outdoor environment. That is, the electronic device controls the screen brightness according to an ambient environment.

The electronic device supporting such a function uses an Active Matrix Organic Light Emitting Diode (AMOLED) for controlling brightness of the electronic device. In the electronic device of the AMOLED type, each light emitting element has a thin transistor therein and thus light emission of each element is separately controlled, allowing each light emitting element to be turned on and turned off. With such a capability, power consumption due to light emission of the electronic device can be reduced.

An electronic device can use a method of controlling screen brightness through a configuration by a user or through an illuminance sensor. However, the electronic device using such a method can control only brightness of an entire area of the screen but cannot control a partial area of the screen which is not used. Accordingly, unnecessary battery consumption is generated in the area of the screen of the electronic device which is not used.

Further, the electronic device may display a plurality of applications, which are being executed, on one screen. Since the same brightness is applied to all components of the screen, the user may feel difficulty in concentrating on a particular area. Further, since the entire screen is displayed with the same brightness, the user may feel eye strain more easily.

### SUMMARY

The present invention has been made to address the above-mentioned problems and disadvantages, and to provide at least the advantages described below. Accordingly, aspects of the invention are defined in the independent claims. The dependent claims define advantageous embodiments. An aspect of the present invention is to provide a method and an apparatus for detecting ambient brightness and dividing a screen of the electronic device into an active display area and an inactive display area, so as to control screen brightness in each area according to the ambient brightness.

In accordance with an aspect of the present invention, a method of controlling screen brightness in an electronic device is provided. The method includes determining whether to control screen brightness when displaying a screen; dividing a display area of screen information partially displayed on the screen if it is determined to control screen brightness; and partially controlling screen brightness of a display area having a low priority in the screen information of which the display area has been divided.

In accordance with another aspect of the present invention, an apparatus for controlling screen brightness in an electronic device is provided. The apparatus includes a display panel for displaying screen information of which brightness is controlled according to ambient brightness; a touch panel configured to detect a selection of screen information displayed on the display panel; and a controller configured to divide a display area and partially control screen brightness separately in each display area if it is determined to control the screen brightness in each display area.

### BRIEF DESCRIPTION OF THE DRAWINGS

The above and other aspects, features, and advantages of the present invention will be more apparent from the following detailed description in conjunction with the accompanying drawings, in which:
FIG. 1 illustrates controlling screen brightness separately in each area of an electronic device according to an embodiment of the present invention;
FIG. 2 is a block diagram of an electronic device according to an embodiment of the present invention;
FIG. 3 is a flowchart illustrating a method of controlling screen brightness according to an embodiment of the present invention;
FIG. 4 is a flowchart illustrating a method of detecting ambient brightness and controlling screen brightness separately in each area according to an embodiment of the present invention;
FIGs. 5A to 5C are views describing an area according to an embodiment of the present invention;
FIG. 6 is a flowchart illustrating a method of controlling screen brightness separately in each of selected areas according to an embodiment of the present invention;
FIGs. 7A to 7D illustrate an example of controlling screen brightness separately in each of selected areas according to an embodiment of the present invention;
FIG. 8 is a flowchart illustrating another method of controlling screen brightness according to an embodiment of the present invention;
FIG. 9 illustrates an example of a method of manually controlling screen brightness according to an embodiment of the present invention; and
FIG. 10 illustrates a method of controlling screen brightness based on each object according to an embodiment of the present invention.

### DETAILED DESCRIPTION OF THE EMBODIMENTS OF THE PRESENT INVENTION

Hereinafter, embodiments of the present invention are described in detail with reference to the accompanying drawings. It should be noted that the same elements are designated by the same reference numerals although they are shown in different drawings. Further, a detailed description of a known function and configuration which may obscure the subject matter of the present invention is omitted. Hereinafter, it should be noted that only descriptions that facilitate understanding of the embodiments of the present invention are provided, and other descriptions that may obscure the subject matter of the present invention are omitted.

The present invention relates to a method and an apparatus for controlling screen brightness according to ambient brightness. According to an embodiment of the present invention, it is possible to sense ambient brightness through a camera or a sensor unit and automatically control screen brightness separately in each area to be optimal brightness. Particularly, according to an embodiment of the present invention, screen brightness is controlled to an optimal brightness in a changing illuminance environment by controlling the screen brightness in accordance with a change in the ambient brightness and a visual characteristic of a user. Accordingly, when the screen brightness of each area is controlled according to ambient brightness, visibility (or readability) of an electronic device can be improved and the needs of the user concerning screen brightness can be met.

In the following description, the term "display area" may be used in describing dividing a screen into objects when various pieces of information are displayed on the screen. Further, the term "object" may include an icon or a widget, an application execution screen, an indicator bar, and a wall paper displayed on the screen, but an object is not limited thereto.

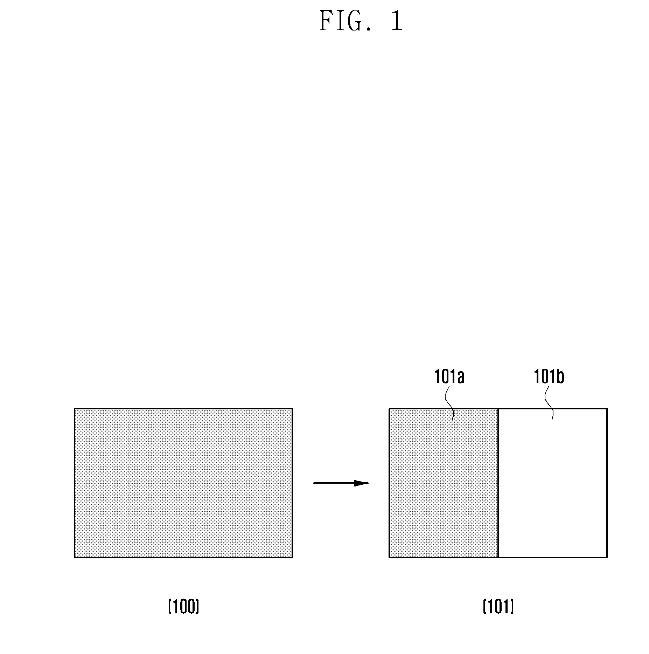

FIG. 1 illustrates an example of controlling screen brightness separately in each area of an electronic device according to an embodiment of the present invention.

Referring to FIG. 1, a display panel (for example, an Active Matrix Organic Light Emitting Diode (AMOLED) screen) of the electronic device may turn off an entire screen as indicated by a reference numeral 100. The screen 100 displayed with black refers to a state in which electrical current is not supplied to a display panel (e.g., Liquid Crystal Display (LCD), Light Emitting Diode (LED), Organic Light Emitting Diode (OLED), or AMOLED). In this case, electrical current is not consumed since the screen is turned off. The electronic device, according to an embodiment of the present invention, controls brightness in a partial area of display areas adaptively or in a context-aware manner according to a state of information displayed on the screen like a screen indicated by a reference numeral 101. The electronic device turns off the screen depending on a state of the displayed information. That is, the electronic device controls the screen brightness separately in each area of the screen by turning off power in an area 101a of the screen 101 and turning on power in an area 101b of the screen 101.

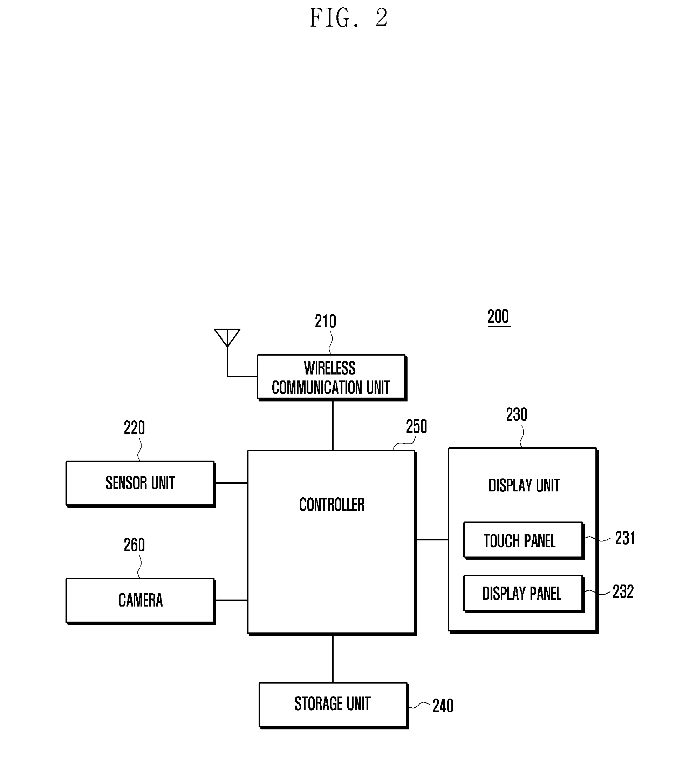

FIG. 2 is a block diagram schematically illustrating a configuration of an electronic device according to an embodiment of the present invention.

Referring to FIG. 2, an electronic device 200 includes a wireless communication unit 210, a sensor unit 220, a display unit 230, a storage unit 240, a controller 250, and a camera 260. The electronic device 200, according to the present invention, may have more components or fewer components. For example, when the electronic device 200, according to an embodiment of the present invention, does not support a separate communication function, the wireless communication unit 210 may be omitted.

The wireless communication unit 210 includes one or more modules which enable wireless communication between the electronic device and a wireless communication system or the electronic device and a network including another electronic device. For example, the wireless communication unit 210 may include a mobile communication module, a Wireless Local Area Network (WLAN) module, a short-range communication module, a location calculating module, a broadcast receiving module and the like.

The sensor unit 220 includes one or more modules that detect a state change of the electronic device. For example, the sensor unit 220 according to the present invention may include an illuminance sensor, a proximity sensor, an iris recognition sensor and the like. Since an operation method and a configuration of each of the sensors correspond to known technologies, a detailed description thereof is omitted.

The display unit 230 includes a touch panel 231 and a display panel 232. The touch panel 231 may be configured integrally with the display panel 232. Further, the touch panel 231 detects a touch input and transmits a detected touch signal to the controller 250. The display unit 232 includes at least one of a Liquid Crystal Display (LCD), a Thin Film Transistor-LCD (TFT-LCD), a Light Emitting Diode (LED), an Organic LED (OLED), an Active Matrix OLED (AMOLED), a flexible display, a bendable display, and a 3D display. Some of the displays may be implemented in a transparent display configured in a transparent or photo-transparent type such that the outside can be viewed therethrough.

The storage unit 240 stores a program for the electronic device 200. Particularly, the storage unit 240 stores a reference value by which screen brightness can be controlled according to ambient brightness.

The controller 250 controls a general operation of the electronic device 200. For example, the controller 250 control a voice call, data communication, a video call and the like. The controller 250 may automatically control screen brightness. Particularly, in an embodiment of the present invention, the controller 250 compares current screen brightness with ambient brightness to determine whether a control of the screen brightness is required. When it is determined that the control of the screen brightness is required, the controller 250 controls the screen brightness separately in each area. When the screen brightness is controlled separately in each area, the controller 250 determines a priority of displayed information and darkly displays a display area of screen information having a low priority. When the controller 250 detects that displayed screen information is selected, the controller 250 controls brightness of a partial area corresponding to the selected screen information. That is, the controller 250 controls the brightness separately in each area or controls the brightness to turn off the power according to the priority of the screen information or a selection of the screen information by the user.

The camera 260 performs a function of photographing a subject of the electronic device 200 and outputting it to the controller 250. Specifically, the camera 260 includes a lens for concentrating light and an image sensor for converting light received through the lens to an electrical signal. The camera 260 processes the electrical signal input from the image sensor into raw data and outputs the raw data.

Particularly, the camera 260, according to an embodiment of the present invention, continuously performs forward or backward photographing at regular time intervals when the screen is displayed. The controller 250 determines ambient brightness through the photographing.

The electronic device 200, in FIG. 2, includes all information and communication devices supporting the function according to the present invention, multimedia devices, and all electronic devices using an Application Processor (AP), a Graphics Processing Unit (GPU), or a Central Processing Unit (CPU) such as application devices of the multimedia devices. For example, the electronic device 200 may include a mobile communication terminal operating based on communication protocols corresponding to various communication systems and also terminals, such as a tablet Personal Computer (PC), a smart phone, a digital camera, a Portable Multimedia Player (PMP), a media player, a portable game terminal, a Personal Digital Assistant (PDA), and the like. A method of controlling the function according to the present invention may be applied to various display terminals, such as a digital television, a Digital Signage (DS), a Large Format Display (LFD), and the like.

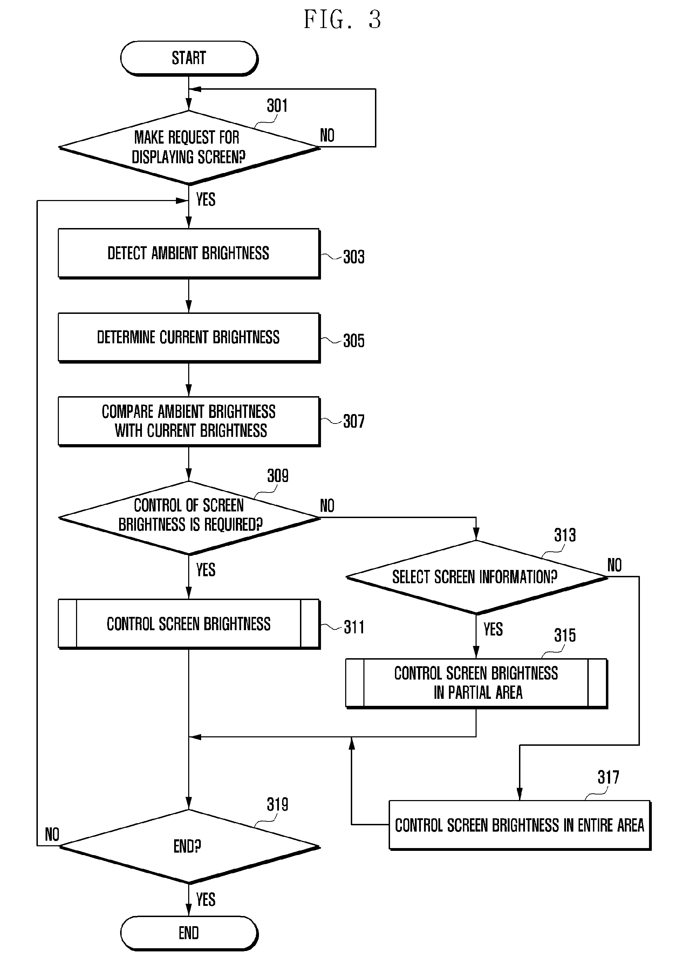

FIG. 3 is a flowchart illustrating a method of detecting ambient brightness and controlling screen brightness separately in each area of the electronic device according to an embodiment of the present invention.

Referring to FIG. 3, when the controller 250 detects a request for displaying information on the touch panel in step 301, it detects ambient brightness through the sensor unit 220 in step 303. Further, the controller 250 may detect the ambient brightness by periodically operating the camera 260. Thereafter, the controller 250 analyzes current brightness of the electronic device in step 305. The current brightness of the device may be a Red Green Blue (RBG) pixel value or a brightness level value. Thereafter, the controller 250 compares the detected ambient brightness with the analyzed current screen brightness in step 307. Next, the controller 250 determines whether a control of the screen brightness is required according to a result of the comparison in step 309. It is determined that the control of the screen brightness is required, when a difference between the detected ambient brightness and the current screen brightness of the screen is larger than or equal to a predetermined reference value. The controller 250 includes at least one reference value for controlling the screen brightness. When the detected ambient brightness value is smaller than a reference value, the controller 250 determines that the ambient environment is in a dark state and controls the screen brightness to be dark. For example, the controller 250 may detect that the ambient brightness is dark like in a cinema in a state where the current screen brightness is brightly displayed. the controller 250 analyzes a difference between the current screen brightness and the ambient brightness. The controller 250 determines whether the control of the screen brightness is required according to the analyzed difference.

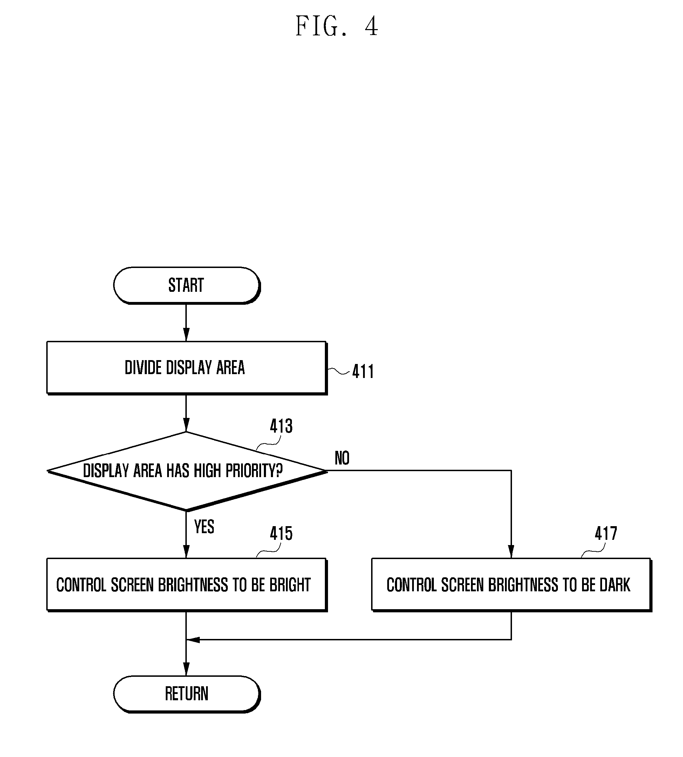

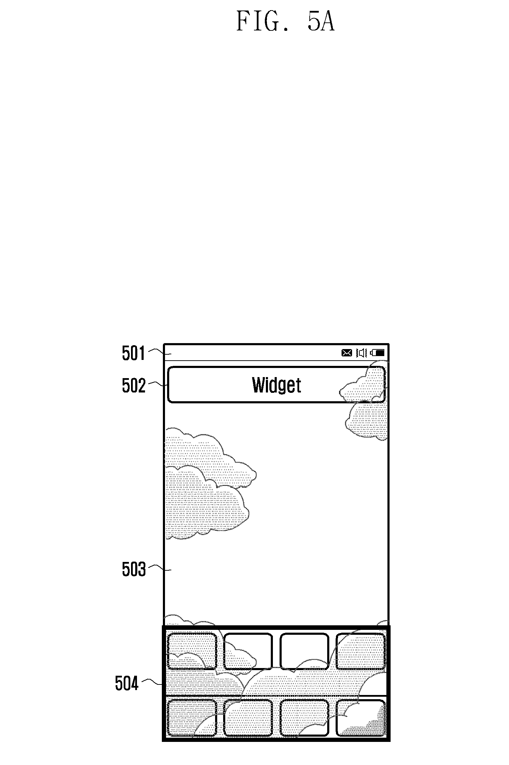

When it is determined that the control of the screen brightness is required, the controller 250 controls the screen brightness in step 311. Step 311 of FIG. 3 is described below in detail with reference to FIG. 4 and FIGs. 5A to 5C.

FIG. 4 is a flowchart illustrating a method of detecting ambient brightness and controlling screen brightness separately in each area according to an embodiment of the present invention. FIGs. 5A to 5C are views describing an area according to an embodiment of the present invention.

Referring to FIG. 4 and FIGs. 5A to 5C, the controller 250 divides a display area according to each object in step 411. FIG. 5A illustrates an example of a screen in which a display area is divided according to priorities of objects displayed on the screen. Referring to FIG. 5A, the controller 250 displays four objects (or layers) in the display area. The four objects may include, for example, an indicator bar 501, a widget 502, a wall paper (background image) 503, an icon 504 (for example, eight icons, and, even though the eight icons correspond to different objects (or layers), they are considered one object). The controller 250 analyzes priorities of the objects displayed in the display area. The priority is determined by a time point when the user uses the object or an importance of each object (or layer). The controller 250 determines that information having a use time point closer to a current time or having a higher importance has a high priority and determines that information having a use time point farther from the current time or having a lower importance has a low priority. Accordingly, the controller 250 may determine that the indicator bar 501, the widget 502, and the icon 504 correspond to display areas having high priority and determine that the wall paper 502 corresponds to the display area having low priority.

Thereafter, the controller 250 determines a priority of the display area displayed on the display panel 232 in step 413. When the display area has high priority, the controller 250 brightly displays the display area in step 415. Meanwhile, when the display area has low priority, the controller 250 darkly displays brightness of the display area having the low priority in step 417. When the brightness of the display area having low priority is darkly displayed, the controller 250 controls the brightness of the display area according to ambient brightness.

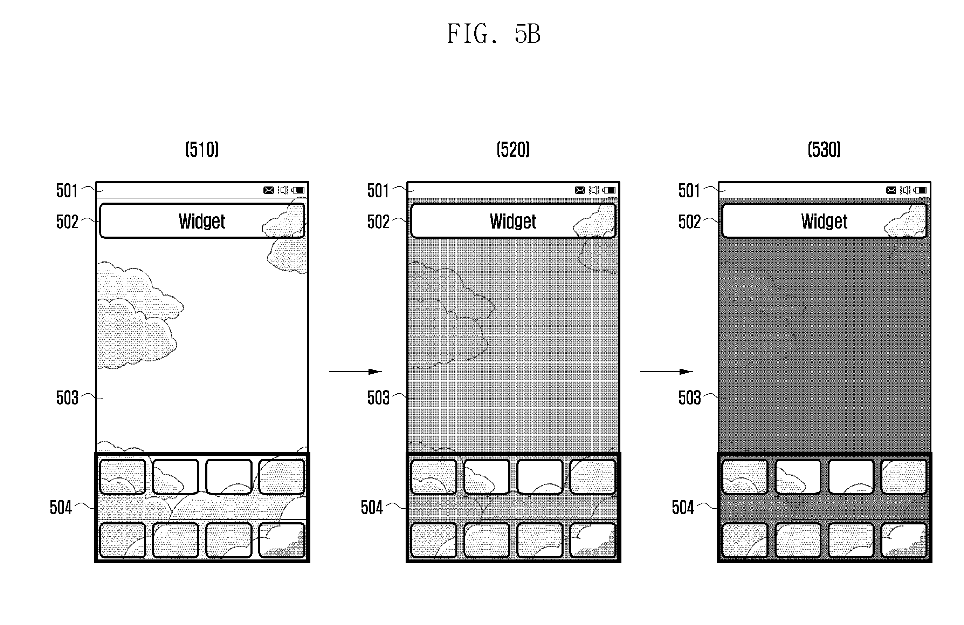

FIG. 5B illustrates an example of a screen in which screen brightness is controlled according to ambient brightness stage by stage. Referring to FIG. 5B, the controller 250 controls brightness of the display area according to ambient brightness and priority. The controller 250 compares ambient brightness detected by the sensor unit 220 or the camera 260 with the current screen brightness displayed on the display panel 232. As a result of the comparison, when the control of the screen brightness is not required, the controller 250 controls the brightness to be normal brightness like a screen 510 of FIG. 5B. "Normal brightness" means that an entire area of the screen is displayed with the same brightness. The controller 250 compares ambient brightness detected by the sensor unit 220 or the camera 260 with the current screen brightness displayed on the display panel 232. Meanwhile, as a result of the comparison, when the difference between the ambient brightness and the current screen brightness is larger than a reference value, the controller 250 divides the display area in step 411 and identifies whether the divided display area has a high priority in step 413. Thereafter, when determining the display area includes display areas of high priority, the controller 250 brightly displays the display areas (e.g., display areas 501, 502, and 504) having high priority in step 415, like in screens 520 and 530 of FIG. 5B. When determining that the display area includes a display area of low priority, the controller 250 darkly displays a display area (e.g., display area 503) having low priority in step 417, like in the screens 520 and 530 of FIG. 5B. That is, the controller 250 controls the brightness of the display area having low priority according to the ambient brightness, like in the screens 520 and 530.

When the difference between the ambient brightness detected by the sensor unit 220 or the camera 260 and the brightness of the display panel 232 is larger than a second reference value, the controller 250 displays the brightness of the display area (for example, the wall paper (background image 503) area) having low priority to be maximally dark like, in the screen 530 of FIG. 5B, and displays the display area (for example, areas of the indicator bar 501, the widget 502, and the icon 504) having high priority to be bright.

Further, when the difference between the ambient brightness detected by the sensor unit 220 or the camera 260 and the current screen brightness of the display panel 232 is between a first reference value and a second reference value, the controller 250 darkly displays the brightness of the display area having low priority, like in the screen 520 of FIG. 5B (for example, an intermediate value between the brightness of the screens 510 and 530). When darkly displaying the display area having low priority, the controller 250 controls a screen brightness level of the display area or displays each pixel corresponding to the display area having low priority by a black pixel.

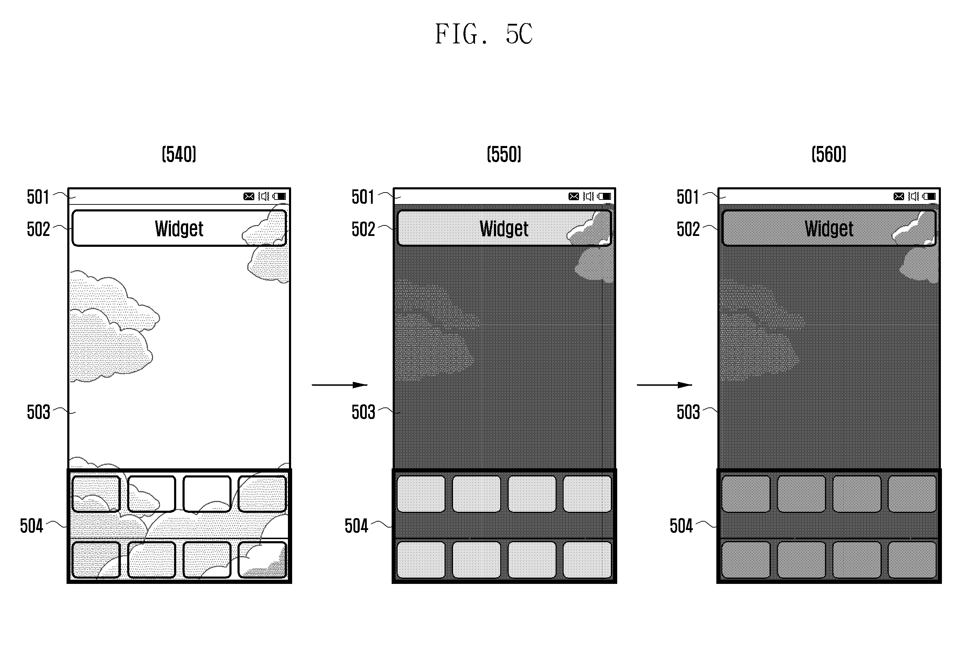

FIG. 5C illustrates another example of a screen in which screen brightness is controlled according to ambient brightness by two stages. Referring to FIG. 5C, when the difference between the ambient brightness and the current screen brightness is larger than the second reference value in a state where the screen is normally displayed, like a screen 540, the controller 250 displays the area (for example, area of the wall paper 503) having low priority to be maximally dark according to the ambient brightness, like a screen 560, and displays the areas 501, 502, and 504 having high priority to have optimal brightness according to the ambient brightness (dark state). Further, when the difference between the ambient brightness and the current screen brightness is between the first reference value and the second reference value, the controller 250 darkly displays the display area 503 having low priority and brightly displays the display areas 501, 502, and 504 having high priority, like in a screen 550. As described above, the controller 250 displays the objects (or layers) with different priorities with different brightness from each other.

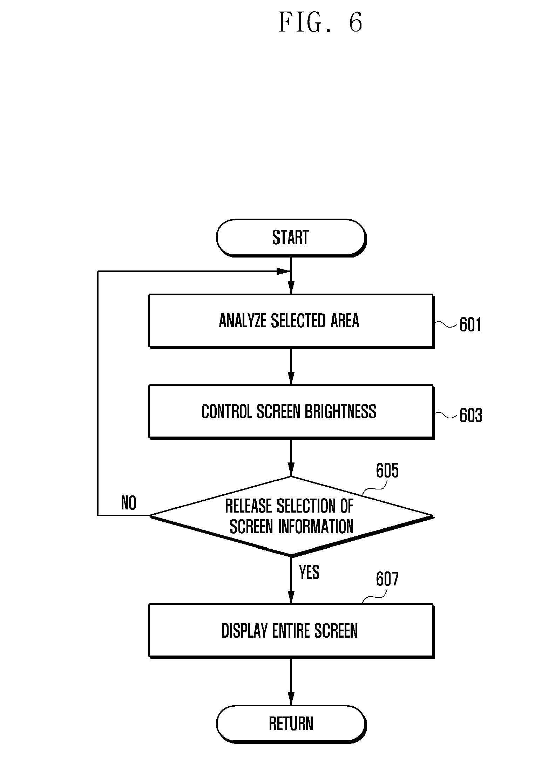

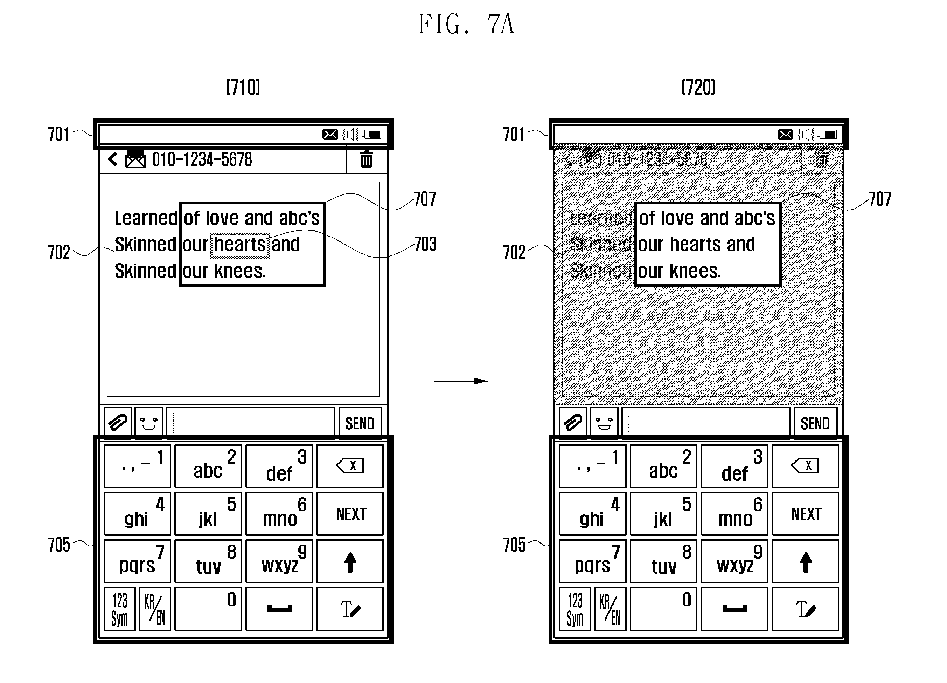

Further, when determining that control of the screen brightness is not required, the controller 250 identifies whether screen information in some of the display areas is selected in step 313. When the screen information is selected in the display area, the controller 250 partially controls the screen brightness of the selected area in step 315. Step 315 of FIG. 3 is described below in detail with reference to FIG. 6 and FIGs. 7A to 7C.

FIG. 6 is a flowchart illustrating a method of controlling screen brightness in each of selected areas according to an embodiment of the present invention. FIGs. 7A to 7C are views describing an example of controlling screen brightness in each of selected areas according to an embodiment of the present invention.

Referring to FIG. 6 and FIGs. 7A to 7C, the controller 250 analyzes a selected area from the display area in step 601 and controls brightness of the selected area in step 603. The controller 250 selects some of the display area according to an area at which the user looks, a pen is hovering, or successive touches are detected.

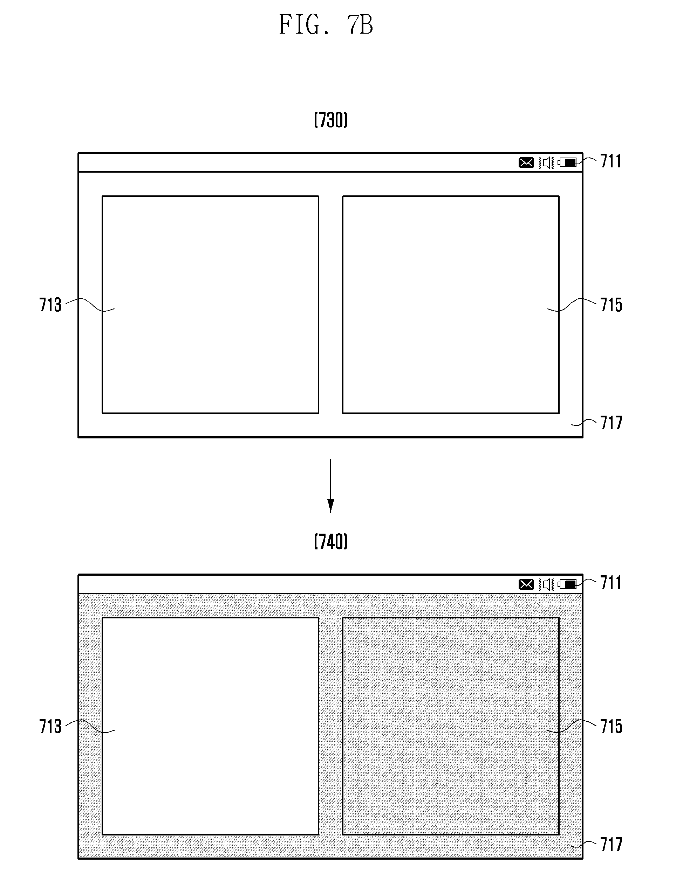

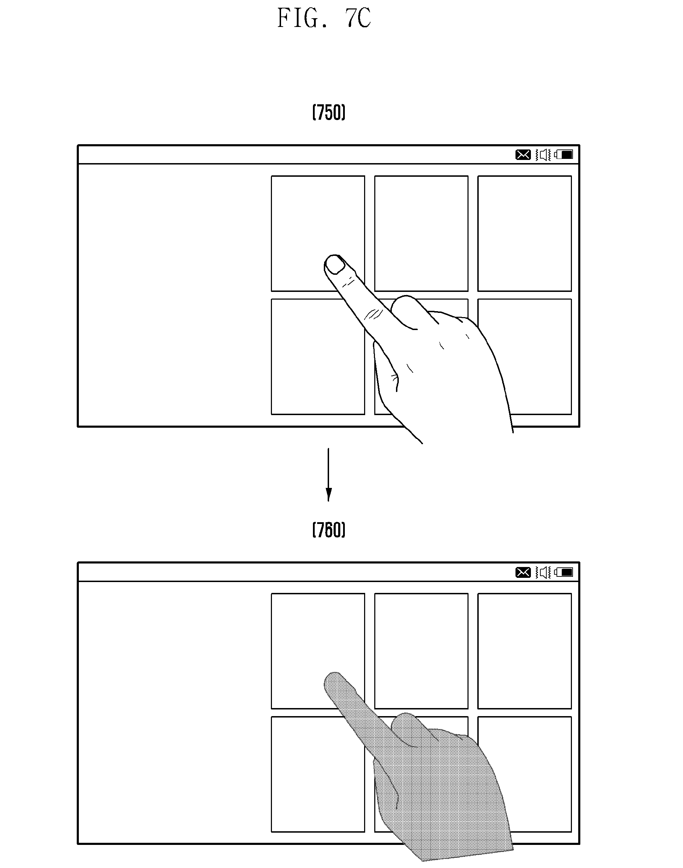

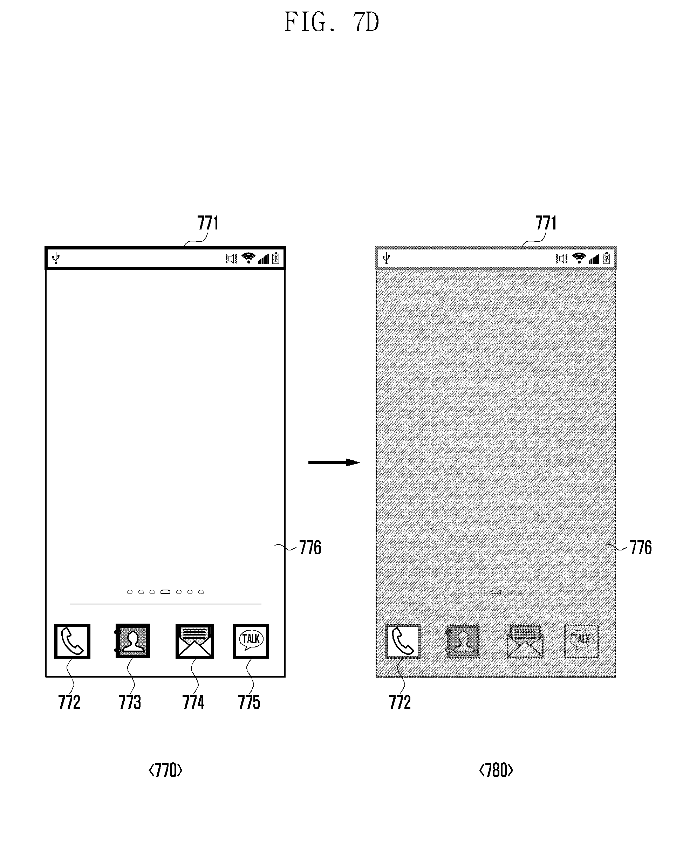

FIG. 7A illustrates an example of a screen in which brightness of the remaining areas of the display areas of the entire screen except for the selected area at which the user looks is controlled. Referring to a screen 710 of FIG. 7, in a state where a Short Message Service (SMS) application is executed, the controller 250 determines an area 703 at which the user is looking (or an area on which the user hovers). In a state where the area at which the user is looking (or area on which the user hovers) is determined, the controller 250 determines the area 703 at which the user is looking (or on which the user hovers) as a selected area in step 601. For example, the selected area may be an area at which the user is looking or an area on which a cursor is located when a pen hovers or information is typed. In FIG. 7A, the selected area is the area at which the user is looking in the state where the SMS application is currently executed. In a state where the area at which the user is looking is determined to be the selected area, the controller 250 determines a peripheral area 707 and a display area having the high priority as the selected area in order to show the context of the area 703 at which the user is currently looking. The controller 250 determines a display area having the high priority as the selected area. For example, a keypad area 705 may be determined as the selected area based on a state where information is typed in the display area having high priority in the currently executed application (SMS application). Simultaneously, the display area of the indicator bar 701 which should always be displayed may be determined as the selected area. That is, the controller 250 may determine the area 701 having high priority, the area 703 at which the user is looking, the keypad area 705, and peripheral area 707 as selected display areas. Further, the controller 250 darkly displays screen brightness of the display area 702 except for the selected display areas 701, 703, 705, and 707 of the display information in step 603 like a screen 720.

FIG. 7B illustrates an example of a screen in which brightness of an area except for areas selected through a detection of successive touches is controlled.

Referring to FIG. 7B, for example, the controller 250 displays one or more windows by executing one or more applications in a tablet. At this time, the controller 250 analyzes a display area and determines a selected area in step 601. In a state where an indicator bar 711, a first window 713, a second window 715, and a wall paper 717 are displayed in the display area, the controller 250 detects successive touch inputs in an area of the first window 713. The touch may include a touch, a tap, a multi-touch, a drag, a drag & drop and the like. The controller 250 determines a position where the successive touch inputs are detected as the selected area. When the positions where the successive touch inputs are detected is determined as a selected area, the controller 250 determines a boundary of an area corresponding to the positions where the touches are detected and approximately determines a boundary of the selected area. For example, when successive touch inputs are detected in the area 713 of the screen 730, the controller 250 darkly display the second window 715 and the wall paper 717 which are the areas except for the first window 713 corresponding to the display area of the selected display information like in the screen 740 in step 603. The selected area includes the first window 713, which is the area having the boundary approximately determined as the boundary of the successive touch areas, and the indicator bar area 711, which should always be displayed. Accordingly, the controller 250 darkly displays the second window 715 and the wall paper 717 corresponding to the display areas except for the first window 713 and the indicator bar 717 which are the selected areas.

In another example, FIG. 7C illustrates an example of a screen in which screen brightness of a selected area is controlled. Referring to FIG. 7C, the controller 250 analyzes a selected area of a screen 750 in step 601. The selected area is an area where a touch continuing for a predetermined time (for example, three seconds) is detected in the display panel. For example, the selected area may be an area of the display area hidden by the user's hand. The controller 250 darkly displays the screen in the selected area like a screen 760 in step 603 by analyzing the selected area corresponding to the touch area where the touch is detected in the same area during a predetermined time (for example, three seconds). The controller 250 divides items displayed in the display area by layers or objects. Further, the controller 250 controls brightness of the layer of the display area to be dark or displays each pixel of each object as a black pixel.

Referring to FIG. 7D, screen information displayed on a screen 770 is, for example, an indicator bar area 771, a background image area 776, and icon areas 772, 773, 774, and 775. In a state where the screen information is displayed, the controller 250 analyzes a selected area of the screen information in step 601.

For example, a selected area of the screen information may be the icon area 772 and the indicator bar area 771. The controller 250 determines whether the display area of the screen information is the selected area information based on a number of user inputs, a number of times of application executions or the like. The controller 250 determines an area where successive inputs are detected as the selected area. Further, in a state where an icon corresponding to an application is displayed, the controller 250 detects a number of times the application is executed and determines an icon corresponding to an application, which has been most frequently executed during a predetermined period (for example, one day), as the selected area. In the state where the icon corresponding to the application is displayed, the controller 250 determines an icon corresponding to an application, which is most recently executed, as the selected area.

The controller 250 determines a display area having a high priority, which should always be displayed, as the selected area. The display area having high priority may include the indicator bar area 771. Accordingly, in FIG. 7D, the controller 250 determines the indicator bar area 771 and the icon area 772 as the selected area. Thereafter, the controller 250 darkly displays areas except for the selected areas in step 603. The areas, except for the selected areas, may be the background image area 776 and the icon areas 773, 774, and 775. Further, the controller 250 identifies whether a selection of the selected area of the display area is released in step 605. When the selection of the screen information is not released, the controller 250 returns to step 601 to analyze the selected area. When the selection of the screen information is released, the controller 250 displays the entire screen with the same brightness.

The controller 250 identifies whether the screen display ends in step 319. If the screen display does not end, the controller 250 returns to step 303 to detect ambient brightness.

If the control of the screen brightness is not required in step 309 and the screen information is not selected in step 313, the controller 250 controls the screen brightness of the entire area in step 317. Further, the controller 250 identifies whether the screen display ends in step 319.

As described above, when detecting a screen display request, the controller 250 compares the ambient brightness with the current brightness. As a result of the comparison, when a difference between the ambient brightness and the current brightness is larger than a reference value, the controller 250 determines to control the screen brightness. When the controller 250 determines to control the screen brightness, it divides the display area according to a priority and darkly displays the screen brightness of a display area having a lower priority. Meanwhile, when the controller 250 determines not to control the screen brightness (e.g. the difference between the ambient brightness and the current brightness is smaller than the reference value), the controller 250 detects a selected area in the display area and darkly displays the brightness of display areas except for the selected area. The selected area may be detected by a direction in which the user is looking, a hovering of a pen, successive touches, a touch on a particular area for a predetermined time or the like. Further, the controller 250 may darkly display the selected area.

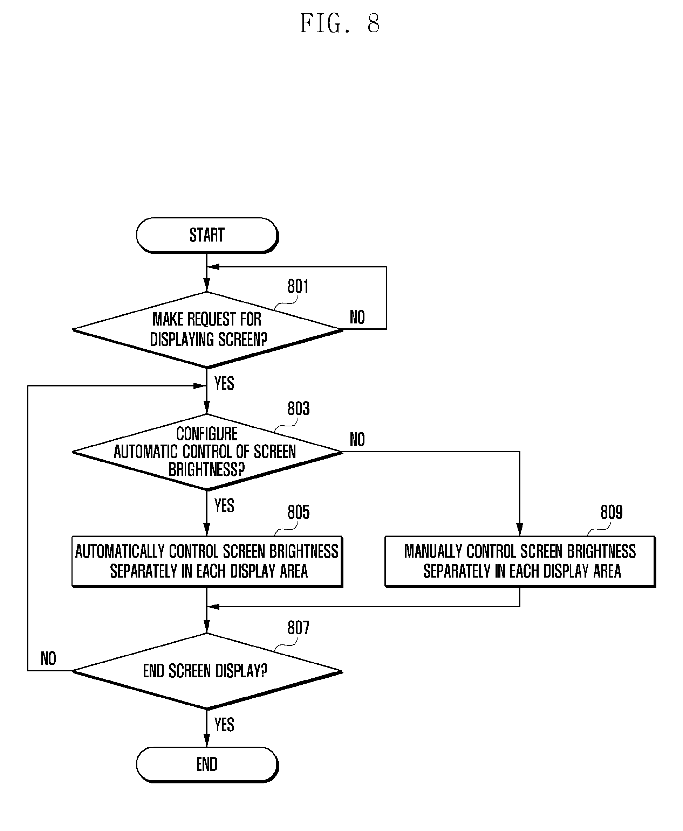

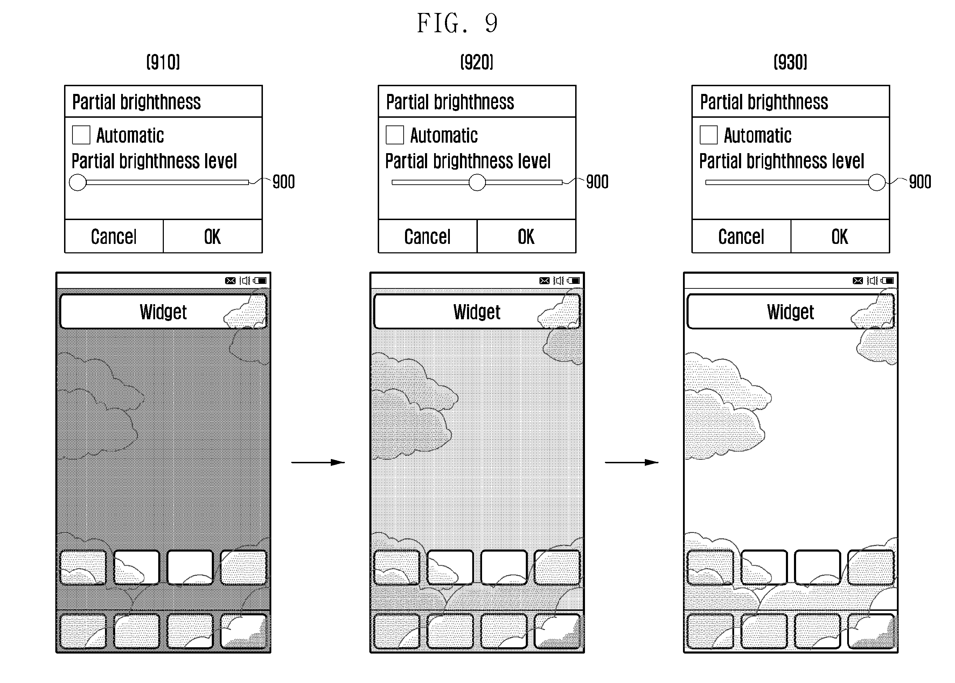

FIG. 8 is a flowchart illustrating another method of controlling screen brightness according to an embodiment of the present invention. FIG. 9 is a view of a method of manually controlling screen brightness according to an embodiment of the present invention.

Referring to FIGs. 8 and 9, when the controller 250 receives a screen display request in step 801, the controller 250 identifies whether the screen brightness is configured to be automatically controlled in step 803. When the automatic control is configured, the controller 250 automatically controls screen brightness separately in each area according to ambient brightness or detects information selected from the display area and automatically controls screen brightness of the selected information in each display area in step 805. The display area is information displayed on the display panel 232. Further, the information is divided by priority, a direction in which the user is looking, a hovering, successive touches or the like. The divided information corresponds to display areas divided according to respective objects or layers.

Meanwhile, when the automatic control is not configured, the controller 250 manually controls the screen brightness in each display area in step 809. FIG. 9 illustrates an example of a screen in which screen brightness is manually controlled.

Referring to FIG. 9, the controller 250 controls brightness of other areas except for the selected area by using a slide bar 900. The selected area may be an area having a high priority or an area in which screen information is selected. The controller 250 manually darkly displays the screen brightness of the areas, except for the selected area, by using the slide bar 900. When a value of the slide bar 900 is a smallest value as shown in a screen 910, the controller 250 most darkly displays brightness of areas, except for the selected area. In contrast, when the value of the slide bar 900 is a largest value as shown in a screen 930, the controller 250 most brightly displays brightness of the areas, except for the selected area, to display the entire screen with the same brightness. Further, when the value of the slide bar 900 is an intermediate value as shown in a screen 920, the controller 250 displays the brightness of the areas, except for the selected area, with brightness having an intermediate value between the screen 910 and the screen 930. In this case, the controller 250 controls the brightness by adjusting a brightness level of the layer.

If the controller 250 does not detect a screen display end request in step 807, the controller 250 returns to step 803 to display the screen.

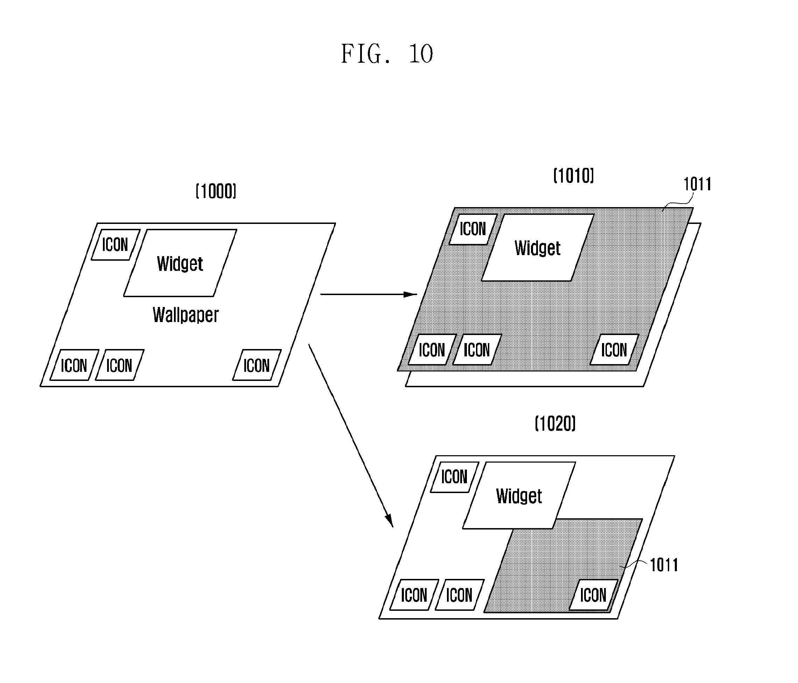

FIG. 10 illustrates a method of controlling screen brightness based on each object according to an embodiment of the present invention.

Referring to FIG. 10, six objects are displayed on a screen 1000. For example, the six objects may include four icons, one widget, and one wall paper. In a state where the six objects are displayed, the controller 250 may partially display some or all of the display areas to be dark in a software manner. For example, the controller 250 may darkly display an object 1011 located in an entire screen area as shown in a screen 1010, and may darkly display an object 1011 located in a partial screen area as shown in a screen 1020. When the controller 250 controls the brightness of the display area to be dark, the controller 250 displays each a pixel corresponding to the area to be darkly displayed as black.

Further, the controller 250 secondarily controls the screen brightness by turning on/off the display panel in a hardware manner or through a button or a physical bar.

For example, when a battery of the electronic device 200 is below 15% of a full charge, the controller 250 may control screen brightness in a manner (e.g. software manner) of controlling brightness of the layer. When the battery is below 10% of a full charge, the controller 250 may control screen brightness in a manner of controlling brightness by turning off the display panel or through a physical bar.

Example embodiments are described in the following clauses.
1. A method of controlling screen brightness in an electronic device, the method comprising:
   determining whether to control screen brightness when displaying a screen;
   dividing a display area of screen information partially displayed on the screen if it was determined to control screen brightness; and
   partially controlling screen brightness of a display area having a low priority in the screen information of which the display area has been divided.
2. The method of clause 1, wherein determining whether to control screen brightness comprises:
   detecting ambient brightness; and
   determining whether to control screen brightness by comparing the ambient brightness with the screen's current brightness.
3. The method of clause 1, wherein dividing the display area of screen information comprises:
   dividing the screen according to each display area; and
   determining a priority of each display area.
4. The method of clause 3, wherein determining whether to control screen brightness comprises controlling a screen brightness level of the display area or turning off the display area by making each pixel of the display area black when it is determined to control screen brightness.
5. The method of clause 4, wherein detecting ambient brightness comprises detecting ambient brightness sensed through an illuminance sensor, a camera, or a combination thereof.
6. The method of clause 1, wherein a display area of a background screen has a low priority.
7. The method of clause 1, wherein determining whether to control screen brightness comprises:
   when it is determined to not control screen brightness according to ambient brightness, analyzing whether to select screen information from the displayed screen information; and
   when screen information of a display area is selected, controlling screen brightness of other display areas except for the display area of the selected screen information.
8. The method of clause 7, wherein the display area of the selected screen information further includes a surrounding area and the display area of the selected screen information has a high priority.
9. The method of clause 8, wherein the display area has a high priority if it includes an indicator bar area or a keypad area, wherein the indicator bar area and keypad area are always displayed when present.
10. The method of clause 7, wherein controlling screen brightness of the other display areas comprises:
   determining the display area of the selected screen information; and
   controlling a screen brightness level of other display areas except for the display area of the selected screen information or turning off the display area by making each pixel in the display area black.
11. The method of clause 7, wherein analyzing whether to select screen information comprises:
   detecting a gaze direction of a user from an output of a camera; and
   selecting the display area corresponding to the detected gaze direction.
12. The method of clause 7, wherein analyzing whether to select screen information comprises:
   detecting a hovering of a pen; and
   selecting the display area corresponding to the detected hovering.
13. The method of clause 7, wherein analyzing whether to select screen information comprises:
   detecting successive touch inputs; and
   selecting display information corresponding to the detected successive touch inputs.
14. The method of clause 10, wherein analyzing whether to select the screen information comprises:
   detecting a number of times an application is executed and selecting display information of an icon corresponding to an application which is most frequently executed during a predetermined time.
15. The method of clause 10, wherein analyzing whether to select screen information comprises:
   determining an application execution time point; and
   selecting display information of an icon corresponding to an application with the execution time point that is most recent.
16. The method of clause 7, wherein analyzing whether to select screen information comprises controlling screen brightness of the selected display area.
17. The method of clause 16, wherein controlling screen brightness of the selected display area comprises detecting a touch for a predetermined time.
18. An apparatus for controlling screen brightness in an electronic device, the apparatus comprising:
   a display panel configured to display screen information of which brightness is controlled according to ambient brightness;
   a touch panel configured to detect a selection of screen information displayed on the display panel; and
   a controller configured to divide a display area and partially control screen brightness separately in each display area if it is determined to control the screen brightness in each display area.
19. The apparatus of clause 18, further comprising a sensor unit configured to detect ambient brightness.
20. The apparatus of clause 18, wherein the controller is configured to detect ambient brightness by periodically using a camera.
21. The apparatus of clause 20, wherein the controller is configured to determine a screen brightness control event by comparing the detected ambient brightness with the display panel's current brightness.
22. The apparatus of clause 18, wherein the controller is configured to determine priorities of the display areas and control a screen brightness level of the display area having a low priority or turn off the display area having a low priority by making each pixel in the display area having a low priority black.
23. The apparatus of clause 18, wherein the controller is configured to compare the detected ambient brightness with the display panel's current brightness, analyze whether screen information is selected when it is determined to not control screen brightness, and darkly display the display area except for a selected display area or the selected display area when screen information is selected.
24. The apparatus of clause 18, wherein the controller is further configured to partially control screen brightness of a surrounding area of a selected display area.
25. The apparatus of clause 23, wherein the controller is configured to, when the controller detects the selection of screen information from a gaze direction of a user, a hovering of a pen, or successive touch inputs, darkly display screen brightness of display areas except for the display area associated with the selected screen information.
26. The apparatus of clause 23, wherein the controller is configured to, when the controller detects the selection of screen information through a detection of a touch in a display area previously touched within a predetermined time, darkly display a screen of the display area.
27. The apparatus of clause 23, wherein the controller is configured to darkly display an area by controlling a brightness level of a layer or making pixels of the corresponding display area black.
28. The apparatus of clause 23, wherein the controller is configured to determine a display area in which is displayed screen information corresponding to an application, which is most frequently executed during a predetermined time or most recently executed, as a selected display area.
29. A computer program product comprising instructions for causing a controller to perform the method of clause 1.

For example, a method of controlling screen brightness in an electronic device, may comprise determining whether to control screen brightness when displaying a screen; determining a display area of screen information displayed on a part of the screen if it was determined to control screen brightness; and controlling screen brightness of the display area, wherein the screen information displayed on the display area has a low priority.

The embodiments disclosed in the present invention and drawings are provided merely to describe and facilitate a thorough understanding of the present invention but are not intended to limit the scope of the present invention. Therefore, it should be construed that all modifications or modified forms drawn by the technical idea of the present invention in addition to the embodiments disclosed herein are included in the scope of the present invention.

## Claims

1. A method of controlling screen brightness in an electronic device, the method comprising:
determining whether to control screen brightness when displaying a screen;
dividing a display area of screen information partially displayed on a part of the screen if it was determined to control screen brightness; and
partially controlling screen brightness of the display area, having a low priority in the screen information of which the display area has been divided.

2. The method of claim 1, wherein determining whether to control screen brightness comprises:
detecting ambient brightness; and
determining whether to control screen brightness by comparing the ambient brightness with the screen's current brightness,
wherein detecting ambient brightness comprises detecting ambient brightness sensed through an illuminance sensor, a camera, or a combination thereof.

3. The method of claim 1, wherein dividing the display area of screen information comprises:
dividing the screen according to each display area; and
determining a priority of each display area.

4. The method of claim 3, wherein determining whether to control screen brightness comprises controlling a screen brightness level of the display area or turning off the display area by making each pixel of the display area black when it is determined to control screen brightness.

5. The method of claim 1, wherein determining whether to control screen brightness comprises:
analyzing whether to select screen information from the displayed screen information;
wherein controlling screen brightness of a display area having a low priority comprise:
controlling screen brightness of other display areas except for the display area of the selected screen information, when screen information of a display area is selected.

6. The method of claim 5 wherein the display area of the selected screen information further includes a surrounding area and the display area of the selected screen information has a high priority, wherein the display area has a high priority if it includes an indicator bar area or a keypad area, wherein the indicator bar area or the keypad area are always displayed when present,
wherein a display area of a background screen has a low priority.

7. The method of claim 5, wherein controlling screen brightness of the other display areas comprises:
determining the display area of the selected screen information; and
controlling a screen brightness level of other display areas except for the display area of the selected screen information or turning off the display area by making each pixel in the display area black.

8. The method of claim 5, wherein analyzing whether to select screen information comprises at least one of:
selecting the display area corresponding to the detected gaze direction of the user by detecting a gaze direction of a user from an output of a camera,
selecting the display area corresponding to the detected hovering by detecting a hovering of a pen,
selecting display information corresponding to the detected successive touch inputs by detecting successive touch inputs,
detecting a number of times an application is executed and selecting an icon corresponding to an application which is most frequently executed during a predetermined time, or
selecting an icon corresponding to an application which is most recently executed by determining an application execution time point.

9. The method of claim 7, wherein analyzing whether to select screen information comprises:
detecting a touch for a predetermined time; and
controlling screen brightness of the selected display area when the screen information is selected in a display area previously touched for predetermined time.

10. An apparatus for controlling screen brightness in an electronic device, the apparatus comprising:
a display panel configured to display screen information of which brightness is controlled according to ambient brightness;
a touch panel configured to detect a selection of screen information displayed on the display panel; and
a controller configured to divide a display area and partially control screen brightness separately in each display area if it is determined to control the screen brightness in each display area.

11. The apparatus of claim 10, further comprising a sensor unit configured to detect ambient brightness.

12. The apparatus of claim 10, wherein the controller is configured to detect ambient brightness by periodically using a camera,
to determine a screen brightness control event by comparing the detected ambient brightness with the display panel's current brightness.

13. The apparatus of claim 10, wherein the controller is configured to determine priorities of the display areas and to control a screen brightness level of the display area having a low priority or to turn off the display area having a low priority by making each pixel in the display area having a low priority black.

14. The apparatus of claim 10, wherein the controller is configured to compare the detected ambient brightness with the display panel's current brightness, analyze whether screen information is selected when it is determined to not control screen brightness, and to display dark the display area except for a selected display area or the selected display area when screen information is selected, to display dark screen brightness of display areas except for the display area associated with the selected screen information when the controller detects the selection of screen information from a gaze direction of a user, a hovering of a pen, or successive touch inputs, to detect the selection of screen information through a detection of a touch in a display area previously touched for a predetermined time, to display dark a screen of the display area, to determine a display area in which is displayed screen information corresponding to an application, which is most frequently executed during a predetermined time or most recently executed, as a selected display area.

15. The apparatus of claim 10, wherein the controller is further configured to control partially screen brightness of a surrounding area of a selected display area.
